# EUROPÄISCHE PATENTSCHRIFT

(11) **EP 2 281 085 B1**
(45) Veröffentlichungstag und Bekanntmachung des Hinweises auf die Patenterteilung: **20.02.2013**
(21) Anmeldenummer: 08871479.5
(22) Anmeldetag: 16.12.2008
(51) Int. Cl.: E01B 19/00, E01B 25/30, B60L 13/00, B61B 13/08

(54) **MAGNETSCHWEBEBAHN**
MAGNETIC LEVITATION TRAIN
TRAIN A SUSTENTATION MAGNETIQUE

(30) Priorität: 22.01.2008 DE 102008005888
(43) Veröffentlichungstag der Anmeldung: 09.02.2011
(73) Patentinhaber: ThyssenKrupp Transrapid GmbH, 34127 Kassel (DE)
(72) Erfinder: MILLER, Luitpold, 85521 Ottobrunn (DE); ZHENG, Qinghua, 82024 Taufkirchen (DE)
(74) Vertreter: Nunnenkamp, Jörg
(86) Internationale Anmeldenummer: PCT/DE2008/002077
(87) Internationale Veröffentlichungsnummer: WO 2009/092341

(56) Entgegenhaltungen:
- DE-A1- 10 111 919
- DE-U1- 20 318 423

## Beschreibung

Die Erfindung betrifft eine Magnetschwebebahn der im Oberbegriff des Anspruchs 1 angegebenen Gattung.

Zur Reduzierung der Geräusche, die beim Betrieb einer Hochgeschwindigkeits-Magnetschwebebahn (400 km/h und mehr) erzeugt werden, ist es bekannt, die Fahrwegträger an verschiedenen Stellen mit flächigen Schallschutzelementen zu versehen, die z. B. als Schallabsorber, Platten- oder Hohlraumresonatoren od. dgl. ausgebildet sein können (DE 101 11 919 A1). Einer derartigen Ausbildung der Fahrwegträger liegt die Überlegung zugrunde, dass die beim Betrieb vom Fahrzeug entwickelten Geräusche auf die Fahrwegträger übertragen und von diesen an die Umgebung abgegeben werden. Es wird daher angenommen, dass durch eine Verkleidung der Fahrwegträger mit flächigen Schallschutzelementen in Form von Folien oder Platten, die gegebenenfalls unter Bildung eines Luftspalts vor den jeweiligen Trägerabschnitten montiert werden, eine deutliche Reduzierung des von den Fahrwegträgem abgestrahlten Schalls erreicht werden kann. Tatsächlich sind derartige Schallschutzmaßnahmen jedoch nicht besonders wirksam, auch wenn die Schallschutzelemente an den Ober- und/oder Untergurten und den Seitenteilen der Träger angebracht werden.

Weitgehend wirkungslos sind ebenfalls bereits bekannte Schallschutzmaßnahmen, die darauf abzielen, den im Trag- und Führsystem einer Magnetschwebebahn erzeugten Schall einzukapseln, indem die Spalte zwischen dem Fahrzeug und den Trägern in ihren Abmessungen minimiert und labyrinthartig gestaltet werden (DE 203 18 423 U1). Eine wesentliche Schalldämmung kann auf diese Weise selbst dann nicht erzielt werden, wenn die den Spalt begrenzenden Elemente aus Materialien mit schallschluckenden Eigenschaften hergestellt werden. Außerdem ergibt sich bei dieser Konstruktion die Gefahr der Vereisung in kalten Jahreszeiten, weshalb zusätzliche Elemente wie z. B. Heizdrähte od. dgl. eingebaut werden müssen, was die Kosten für die Herstellung und den Betrieb der Magnetschwebebahn erheblich vergrößert. Schließlich können an den Außenseiten der Fahrzeuge angebrachte Bauteile den Fahrtwiderstand erhöhen und das Aussehen der Fahrzeuge beeinträchtigen. Ausgehend davon liegt der Erfindung das technische Problem zugrunde, die Magnetschwebebahn der eingangs bezeichneten Gattung so auszubilden, dass eine Übertragung des Schalls auf den Fahrweg weitgehend verhindert und eine Einkapselung des Schalls überflüssig gemacht und dadurch eine Schallausbreitung in die Umgebung der Magnetschwebebahn stärker als bisher reduziert wird.

Gelöst wird dieses Problem mit den kennzeichnenden Merkmalen des Anspruchs 1.

Die Erfindung beruht auf der Erkenntnis, dass als Hauptursache für die Schallerzeugung weniger die Aerodynamik im Außenbereich der Fahrzeuge als vielmehr die Interaktion zwischen dem Langstator und den Magnetsystemen anzusehen ist. Mit anderen Worten scheint die Geräuschentwicklung einer mit hoher Geschwindigkeit betriebenen Magnetschwebebahn hauptsächlich in dem Raum zwischen den Trag- und Führmagneten und den diesen an den Trägern zugeordneten Bauteilen, d. h. den Statorpaketen und den Seitenführschienen stattzufinden. Wird dieser Raum daher erfindungsgemäß durch vorzugsweise großvolumige Schalldämpfungskörper mit hoher innerer Reibung ausgefüllt, dann wird ein großer Teil der erzeugten Schallenergie bereits in Wärme umgewandelt und damit absorbiert, bevor die Schallwellen die Fahrwegträger oder etwa zwischen diesen und dem Fahrzeug befindliche, mögliche Austrittsspalte erreichen. Die Geräuschabgabe an die Umgebung wird damit wirksam reduziert.

Weitere vorteilhafte Merkmale der Erfindung ergeben sich aus den Unteransprüchen.

Die Erfindung wird nachfolgen in Verbindung mit den beiliegenden Zeichnungen an einem Ausführungsbeispiel näher erläutert. Es zeigen:
Fig. 1 einen schematischen Querschnitt durch ein übliches Magnetschwebefahrzeug im Bereich eines Gestellbügels sowie eines mit einem Langstator versehenen Fahrwegs und
Fig. 2 und 3 schematische Schnitte durch den Fahrweg längs der Linie II - II der Fig. 1 in einem oberen, dicht unterhalb von Statorpaketen befindlichen Bereich und ohne Anwesenheit des Fahrzeugs.

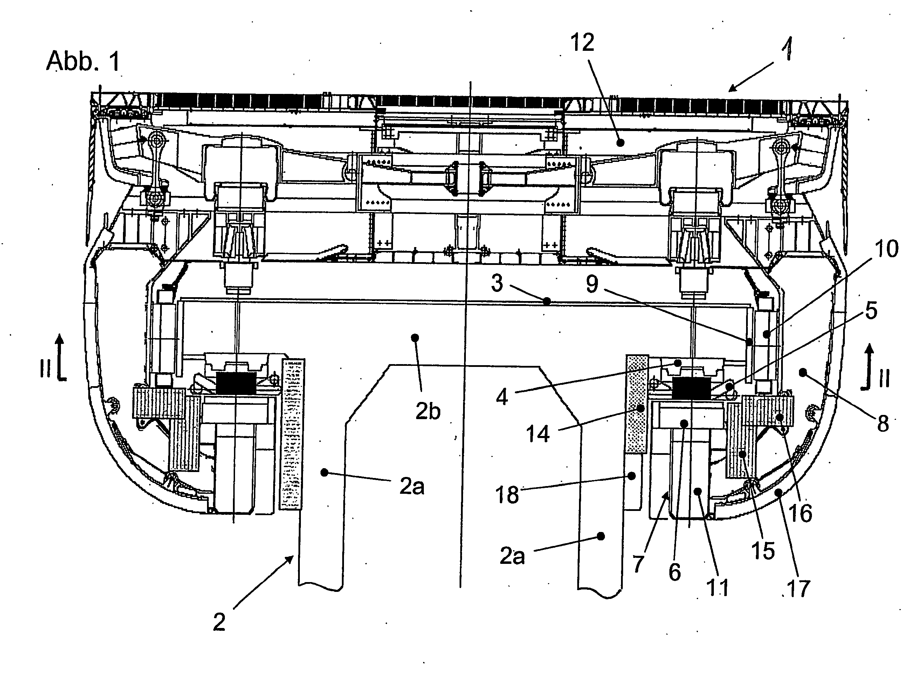

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellten Trägern 2 zusammengesetzt ist, die z. B. je zwei Seitenteile 2a und einen diese verbindenden Obergurt 2b enthalten, auf dem Fahrwegplatten 3 montiert sind. Der Antrieb des Magnetschwebefahrzeugs 1 erfolgt mittels eines Langstator-Linearmotors, der an der Unterseite des Obergurts 2b und außerhalb der Seitenteile 2a befestigte, in dessen Längsrichtung aufeinander folgende Statorpakete 4 aufweist. Die Statorpakete 4 enthalten abwechselnd aufeinander folgende, in Fig. 1 nicht dargestellte Zähne und Nuten, in die Wicklungen 5 eingelegt sind, die mit Drehstrom variabler Amplitude und Frequenz gespeist werden. Das eigentliche Erregerfeld des Langstatormotors wird durch wenigstens ein erstes, Tragmagnete 6 aufweisendes Magnetsystem 7 erzeugt, das mit wenigstens einem seitlichen Gestellbügel 8 am Magnetschwebefahrzeug 1 befestigt ist und den in Fig. 1 nach unten offenen Nuten der Statorpakete 4 zugewandte Magnetpole aufweist. Das Magnetsystem 7 stellt nicht nur das Erregerfeld bereit, sondern erfüllt auch die Funktionen des Tragens und Schwebens, indem es beim Betrieb des Magnetschwebefahrzeugs 1 einen vorgegebenen Tragspalt von z. B. 10 mm zwischen den Tragmagneten 6 und den Statorpaketen 4 aufrecht erhält.

Zur Spurführung des Magnetschwebefahrzeugs 1 sind an den Außenseiten des Obergurts 2b angebrachte Seitenführschienen 9 vorgesehen, denen wenigstens ein zweites, ebenfalls an den Gestellbügeln 8 montiertes und als Führmagnet wirkendes Magnetsystem 10 gegenüber steht, das beim Betrieb dazu dient, zwischen sich und der Führschiene 9 einen dem Tragspalt entsprechenden Führspalt aufrecht zu erhalten.

Die Magnetsysteme 7 und 10 bilden jeweils ein an den Gestellbügeln 8 befestiges Modul für die Funktionen "Tragen" bzw. "Führen". Es ist jedoch klar, dass am Magnetschwebefahrzeug 1 seitlich nebeneinander und in Fahrtrichtung hintereinander in der Regel eine Vielzahl derartiger Module angebracht sein kann.

Das Magnetsystem 7 für die Funktion "Tragen" enthält hintereinander angeordnete Magnetpole mit elektrisch in Reihe geschalteten Wicklungen sowie Kernen, die durch nicht gezeigte Polrücken miteinander verbunden und mittels ebenfalls nicht dargestellter Polwangen und diese durchragender Stäbe an einem Magnetrücken-Kasten 11 des Magnetsystems 7 befestigt sind. An diesem Magnetrücken-Kasten 11 greifen die Gestellbügel 8 (Fig. 1) an, die mit einem biegesteifen, Längs- und Querverbinder aufweisenden Untergestell bzw. Schweberahmen 12 verbunden sind, auf dem ein mit einer Fahrgastzelle versehener, nicht dargestellter Wagenkasten des Magnetschwebefahrzeugs 1 (Fig. 1) abgestützt ist.

Das Magnetsystem 10 enthält in entsprechender Weise Magnetpole, die von Kernen und diesen zugeordneten Wicklungen gebildet werden und an eine gemeinsame Ebene grenzen, die im Ausführungsbeispiel senkrecht zu der Ebene steht, an welche die Magnetpole des Magnetsystems 7 grenzen.

Magnetschwebefahrzeuge 1 und deren Magnetsysteme sind dem Fachmann z. B. aus den Druckschriften US-PS 4,698,895, DE 39 28 278 A1, DE 39 28 278 A1, PCT WO 97/30504 A1 und DE 10 2004 056 438 A1 allgemein bekannt, die hiermit der Einfachheit halber durch Referenz auf sie zum Gegenstand der vorliegenden Offenbarung gemacht werden.

Im Hinblick auf die beim Betrieb der beschriebenen Magnetschwebebahn auftretenden Geräusche wird angenommen, dass als wesentliche Schallquelle ein Bereich zwischen den genuteten Statorpaketen 4 und den diesen gegenüber liegenden Tragmagneten 6 angesehen werden muss. Erfindungsgemäß wird daher vorgeschlagen, diesen Bereich soweit wie möglich mit Schalldämpfungskörpern zu umgeben, um eine wirksam Schalldämpfung bereits in unmittelbarer Nähe der Schallquelle zu erzielen.

Zu diesem Zweck werden erste Schalldämpfungskörper 14 in einem Raum vorgesehen, der entsprechend Fig. 1, wenn ein Träger 2 von einem Fahrzeug 1 passiert wird, zwischen dem ersten Magnetsystem 7 und dem entsprechenden Seitenteil 2a des Trägers 2 liegt. Die ersten Schalldämpfungskörper 14 werden an den Außenseiten der Seitenteile 2a befestigt und möglichst bis zu deren oberen Enden bzw. den von diesen mit den quer verlaufenden Obergurten 2b gebildeten Ecken erstreckt, so dass sie diejenigen Räume ausfüllen, die sich beim Passieren eines Fahrzeugs 1 zwischen den Außenseiten der Seitenteile 2a einerseits und den Statorpaketen 4 samt Wicklungen 5 sowie den ersten Magnetsystemen 7 andererseits ergeben, wie aus Fig. 1 klar ersichtlich ist.

Zur Vervollständigung der Schalldämpfung sind im Fahrzeug 1 zweite Schalldämpfungskörper 15 untergebracht. Diese Schalldämpfungskörper 15 befmden sich vor allem auf der von den Seitenteilen 2a abgewandten Außenseite des ersten Magnetsystems 7 und erstrecken sich so weit wie möglich, d. h. soweit es die räumlichen Verhältnisse in diesem Bereich zulassen, nach oben und unten derart, dass sie sowohl die Tragmagnete 6 abdecken als auch einen darunter befindlichen Teil des Magnetrücken-Kastens 11 in ausreichendem Maße ausfüllen.

Schließlich sind bei einem derzeit für am besten gehaltenen Ausführungsbeispiels auch noch dritte Schalldämpfungskörper 16 vorgesehen, die insbesondere in einem Raum zwischen dem ersten und dem zweiten Magnetsystem 6 bzw. 10 angeordnet sind, wobei sie die zweiten Schalldämpfungskörper 15 an ihren Außenseiten vorzugsweise teilweise überlappen. Die dritten Schalldämpfungskörper 16 sind vorzugsweise ebenfalls im Magnetrücken-Kasten 11 untergebracht.

Durch die zweiten und dritten Schalldämpfungskörper 15, 16 ist es möglich, die an den Tragspalt grenzenden Komponenten sowohl des Fahrwegs als auch des Fahrzeugs 1 an der von den Trägern 2 abgewandten Seite des Magnetsystems 7 und zusätzlich auch die an den Führspalt grenzenden Komponenten nach unten hin abzudecken. Damit ist die gesamte, als kritisch angesehene Schallquelle entweder durch die erfindungsgemäßen Schalldämpfungskörper 14, 15 und 16 und/oder durch konstruktionsbedingt ohnehin bereits vorhandene, zumindest teilweise ebenfalls schalldännmend wirkende Teile abgedeckt.

Die Schalldämpfungskörper 14 bis 16 werden, damit sie wirksam sind, einerseits als voluminöse und nicht lediglich flächige Elemente ausgebildet und andererseits aus Materialien mit hoher innerer Reibung gegenüber den erzeugten Schallwellen hergestellt. Unter "voluminös" wird im Rahmen der Erfindung verstanden, dass die in Richtung der Schallausbreitung gemessene Dicke der Schalldämpfungskörper 14 bis 16 ein gewisses Mindestmaß von z. B. 8 cm nicht unterschreiten sollte, wobei Dicken von 10 cm bis 20 cm derzeit für wünschenswert erachtet werden. Außerdem sollten die Schalldämpfungskörper 14 bis 16 in den kritischen, an die Magnetsysteme 7, 10 grenzenden Bereichen so ausgebildet werden, dass sie das konstruktiv nutzbare Volumen in diesen Bereichen soweit wie erforderlich und/oder möglich ausfüllen. Durch die erfindungsgemäße Kombination aus voluminösen Schalldämpfungskörpern 14 bis 16 sowohl an den Trägern 2 als auch im Fahrzeug 1 mit Materialien hoher innerer Reibung gegenüber den erzeugten Schallwellen wird erreicht, dass ein großer Teil des Schalls in den Schalldämpfungskörpern 14 bis 16 in Wärme umgewandelt und daher wirksam absorbiert bzw. vernichtet wird.

Im Übrigen zeigt Fig. 1, dass die Schalldämpfungskörper 15, 16 in den ohnehin vorhandenen, innen weitgehend hohlen, von den Gestellbügeln 8 getragenen Magnetrücken-Kästen 11 untergebracht und nach außen durch übliche Verkleidungsteile 17 abgedeckt werden können. Daher beeinflussen sie weder den optischen Gesamteindruck des Fahrzeugs 1 und/oder Trägers 2 noch den Fahrtwiderstand des Fahrzeugs 1. Außerdem zeigt Fig. 1, dass die Träger 2 zumindest auf der einen, hier rechten Seite mit schematisch angedeuteten Halterungen 18 für Leitungen versehen sein können, die zur induktiven Übertragung von elektrischer Energie vom Fahrweg auf das Fahrzeug 1 dienen und mit in diesem angeordneten, nicht gezeigten Empfangsspulen zusammenwirken. Wie Fig. 1 zeigt, werden die ersten Schalldämpfungskörper 14 bevorzugt in dem gesamten, oberhalb der Halterungen 18 zur Verfügung stehenden Raum angeordnet.

Als Materialien für die Schalldämpfungskörper 14 bis 16 eignen sich vor allem poröse Kunst- bzw. Schaumstoffmaterialien, wobei eine Optimierung der inneren Reibung in Abhängigkeit von den im Einzelfall vorhandenen, durch Messungen zu ermittelnden Frequenzen der erzeugten Schallwellen vorgenommen werden kann. Außerdem ist es zweckmäßig, für die an den Trägern 2 befestigten Schalldämpfungskörper 14 Materialien zu verwenden, die witterungsbeständig sind und eine hohe Lebensdauer haben. Außerdem können die Schalldämpfungskörper 14 bei Bedarf aus massiven, schweren Materialien bestehen, da ihr Gewicht wegen der Befestigung an den Trägern 2 weniger bedeutsam ist. Dagegen werden die Schalldämpfungskörper 15 und 16 vorzugsweise aus Materialien mit optimalen Dämpfungs- bzw. Absorptionseigenschaften hergestellt, auch wenn dadurch die Standzeiten reduziert sind. Es wird insoweit davon ausgegangen, dass die im Fahrzeug 1 befindlichen Schalldämpfungskörper 15, 16 während üblicher Wartungsarbeiten bei Bedarf ohne weiteres ausgetauscht werden können, während eine Erneuerung der Schalldämpfungskörper 14 längs des gesamten Fahrwegs mit einem erheblichen Aufwand verbunden wäre. Da die Schalldämpfungskörper 15 und 16 das Fahrzeuggewicht erhöhen, sollten sie außerdem aus möglichst leichten Materialien hergestellt werden.

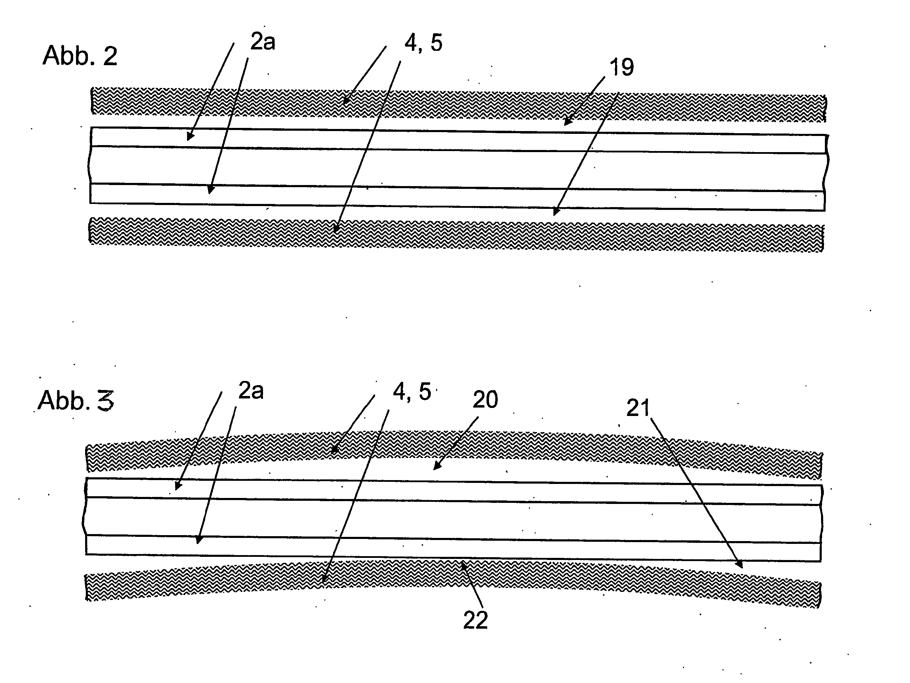

Fig. 2 und 3 zeigen in einem schematischen Schnitt und in einer Ansicht von unten her die Abstände zwischen den Seitenteilen 2a des Trägers 2 und den im Ausführungsbeispiel auf beiden Seiten des Fahrwegs angebrachten Statorpaketen 4 und Wicklungen 5. Während bei einem geraden Fahrwegabschnitt (Fig. 2) die Abstände zwischen den Seitenteilen 2a und den Statorpaketen 4 durchweg konstant sind, ergeben sich in gekrümmten Fahrwegabschnitten (Fig. 3) von den Kurvenradien abhängige Abstände. Dies ist eine Folge des Umstandes, dass die Fahrwegträger 2 eine vergleichsweise große Länge von z. B. ca. 9 m bis 25 m besitzen und in der Regel nur wenig oder gar nicht gekrümmt sind, die Seitenteile 2a des Trägers 2 als Polygonzug ausgeführt werden und nur der den Obergurt 26 einschließende Fahrzeugtisch des Trägers 2 gemäß den Radien der Trasse ausgebildet ist. Dadurch entstehen, über die Trägerlänge gesehen, unterschiedlich große Freiräume, wobei die Unterschiede mit abnehmendem Kurvenradius anwachsen. Erfindungsgemäß wird vorgeschlagen, die ersten Schalldämpfungskörper 14 nur an solchen Stellen des Fahrwegs anzubringen, wo zwischen den Seitenteilen 2a und den Statorpaketen 4/Wicklungen 5 ausreichend große Freiräume 19 (Fig. 2) oder 20, 21 (Fig. 3) vorhanden sind. An denjenigen Stellen, wo die Abstände sehr klein sind und damit Freiräume 22 mit einer nur geringen Breite entstehen, werden die Schalldämpfungskörper 14 dagegen zweckmäßig ganz weggelassen, da sie an solchen Stellen wegen ihrer geringen Dicke ohnehin weitgehend wirkungslos wären. Das hat zur Folge, dass die Träger 2, in Fahrtrichtung betrachtet, vorzugsweise nicht durchgehend, sondern nur segmentweise mit den Schalldämpfungskörpern 14 versehen sind, was die Schalldämmungseigenschaften allerdings nur geringfügig beeinträchtigt.

Die Erfindung ist nicht auf das beschriebene Ausführungsbeispiel beschränkt, das auf vielfache Weise abgewandelt werden könnte. Das gilt insbesondere für die Lage und Form der zweiten und dritten Schalldämpfungskörper 15 und 16. Diese könnten alternativ zu einstückigen Körpern verbunden und/oder als Ganzes einstückig hergestellt sein. Weiter ist es abweichend von Fig. 1 nicht erforderlich, für die ersten Schalldämpfungskörper 14 jeweils den gesamten zur Verfügung stehenden Raum zu nutzen, sofern ihre Dicke zur Erzielung der gewünschten Schallabsorption ausreicht. Außerdem ist es zur Begrenzung der Installationskosten zweckmäßig, die ersten Schalldämpfungskörper 14 nur in solchen Fahrwegabschnitten vorzusehen, wo eine Schalldämmung der beschriebenen Art tatsächlich erwünscht oder erforderlich ist. Weiterhin können die anhand eines Ausführungsbeispiels beschriebenen, Träger 2 sowie die auf beiden Seiten desselben im Wesentlichen symmetrisch angeordneten Antriebs- und/oder Führelemente 4, 5 und 7 bzw. 9, 10 anders ausgebildet und/oder nur zentral, in einem mittleren Teil des Fahrwegs angeordnet sein. Dementsprechend könnte das Fahrzeug 1 in die Magnetsysteme 6 und 10 aufweisenden Bereichen anders ausgebildet sein, als aus Fig. 1 ersichtlich ist. Außerdem ist in allen beschriebenen Fällen natürlich zu beachten, dass die ersten Schalldämpfungskörper 14 nicht dicker ausgebildet sein dürfen, als unter Beachtung aller denkbaren Toleranzen möglich ist, um Berührungen des Fahrzeugs 1 mit den Schalldämpfungskörpern 14 zu vermeiden. Außerdem ist klar, dass in einem Fahrzeug 1 normalerweise eine Mehrzahl von ersten und zweiten Magnetsystemen 6, 10 hintereinander angeordnet ist und in diesem Fall zweckmäßig alle diese Magnetsysteme entsprechend der obigen Beschreibung ausgebildet sind. Schließlich versteht sich, dass die verschiedenen Merkmale auch in anderen als den beschriebenen und dargestellten Kombinationen angewendet werden können.

## Patentansprüche

1. Magnetschwebebahn mit einem Fahrweg, der eine Mehrzahl von in einer Fahrtrichtung hintereinander angeordneten, mit Statorpaketen (4) versehenen Trägern (2) enthält, mit wenigstens einem Fahrzeug (1), das wenigstens ein erstes Magnetsystem (7) enthält, das mit den Statorpaketen (4) einen Langstator-Linearmotor bildet und beim Betrieb des Fahrzeugs (1) durch einen dessen Schwebezustand herbeiführenden Tragspalt von den Statorpaketen (4) beabstandet ist, und mit an den Trägern (2) angebrachten, ersten Schalldämpfungselementen, **dadurch gekennzeichnet, dass** die ersten Schalldämpfungselemente aus voluminösen Schalldämpfungskörpern (14) bestehen, die so an den Trägern (2) angeordnet sind, dass sie beim Passieren des Fahrzeugs (1) in einem Raum zwischen den Trägern (2) und dem ersten Magnetsystem (7) und dem Tragspalt liegen, und dass auf der von den Trägern (2) abgewandten Seite des Magnetsystems (7) zweite, entsprechend ausgebildete Schalldämpfungskörper (15) am Fahrzeug (1) angebracht sind.

2. Magnetschwebebahn nach Anspruch 1, **dadurch gekennzeichnet, dass** die Träger (2) mit senkrecht zu den Statorpaketen (4) angeordneten Seitenführschienen (9) versehen sind, das Fahrzeug (1) wenigstens ein zweites, mit den Seitenführschienen (9) zusammenwirkendes und mit diesem einen Führspalt bildendes Magnetsystem (10) aufweist und dritte Schalldämpfungskörper (16) in einem Raum unterhalb des zweiten Magnetsystems (10) und des Führspalts angeordnet sind.

3. Magnetschwebebahn nach Anspruch 1 oder 2, **dadurch gekennzeichnet, dass** die zweiten und dritten Schalldämpfungskörper (15, 16) in von Gestellbügeln (8) des Fahrzeugs (1) getragenen Magnetrücken-Kästen (11) untergebracht sind.

4. Magnetschwebebahn nach einem der Ansprüche 1 bis 3, **dadurch gekennzeichnet, dass** die zweiten und dritten Schalldämpfungskörper (15, 16) nach außen durch Verkleidungsteile (17) abgedeckt sind.

5. Magnetschwebebahn nach einem der Ansprüche 1 bis 4, **dadurch gekennzeichnet, dass** die ersten Schalldämpfungskörper (14) bis in einen Raum zwischen den Statorpaketen (4) und den Trägern (2) hineinragen.

6. Magnetschwebebahn nach einem der Ansprüche 1 bis 5, **dadurch gekennzeichnet, dass** die Träger (2) in Kurven des Fahrwegs nur dort mit ersten Schalldämpfungskörpern (14) versehen sind, wo ausreichend große Freiräume (20, 21) zwischen den Trägern (2) und den Statorpaketen (4) vorhanden sind.

7. Magnetschwebebahn nach einem der Ansprüche 2 bis 6, **dadurch gekennzeichnet, dass** die dritten Schalldämpfungskörper (16) in einem Raum zwischen dem ersten und dem zweiten Magnetsystem (7, 10) angeordnet sind.

8. Magnetschwebebahn nach einem der Ansprüche 1 bis 7, **dadurch gekennzeichnet, dass** die zweiten und dritten Schalldämpfungskörper (15, 16) das gesamte nutzbare Volumen zwischen den beiden Magnetsystemen (7, 10) ausfüllen.

9. Magnetschwebebahn nach einem der Ansprüche 1 bis 8, **dadurch gekennzeichnet, dass** die Schalldämpfungskörper (14 bis 16) aus Materialien mit hoher innerer Reibung bestehen.

10. Magnetschwebebahn nach einem der Ansprüche 1 bis 9, **dadurch gekennzeichnet, dass** die ersten Schalldämpfungskörper (14) nur in solchen Abschnitten des Fahrwegs vorgesehen sind, wo eine Schalldämpfung erwünscht oder erforderlich ist.

## Claims

1. A magnetic levitation railway, having a driveway which contains a plurality of carriers (2), which are arranged one behind the other in the direction of travel and are provided with stator packs (4), having at least one vehicle (1), which contains at least one first magnet system (7), which together with the stator packs (4) forms a long stator linear motor and during operation of the vehicle (1) is spaced apart from the stator packs (4) by a support gap bringing about the levitation state of the said vehicle, and having first silencing elements which are attached to the carriers (2), **characterised in that** the first silencing elements consist of voluminous silencing bodies (14), which are arranged on the carriers (2) in such a manner that they lie in a space between the carriers (2) and the first magnet system (7) and the support gap when the vehicle (1) passes, and that second, correspondingly formed silencing bodies (15) are attached to the vehicle (1) on the side of the magnet system (7) facing away from the carriers (2).

2. The magnetic levitation railway according to Claim 1, **characterised in that** the carriers (2) are provided with lateral guide rails (9), which are arranged perpendicularly to the stator packs (4), the vehicle (1) has at least one second magnet system (10), which interacts with the lateral guide rails (9) and forms a guide gap with the latter, and third silencing bodies (16) are arranged in a space under the second magnet system (10) and guide gap.

3. The magnetic levitation railway according to Claim 1 or 2, **characterised in that** the second and third silencing bodies (15, 16) are accommodated in magnetic back boxes (11) which are carried by frame straps (8) of the vehicle (1).

4. The magnetic levitation railway according to one of Claims 1 to 3, **characterised in that** the second and third silencing bodies (15, 16) are covered to the outside by casing parts (17).

5. The magnetic levitation railway according to one of Claims 1 to 4, **characterised in that** the first silencing bodies (14) project into a space between the stator packs (4) and the carriers (2).

6. The magnetic levitation railway according to one of Claims 1 to 5, **characterised in that** in curves of the driveway the carriers (2) are only provided with first silencing bodies (14) where there is sufficient free space (20, 21) between the carriers (2) and the stator packs (4).

7. The magnetic levitation railway according to one of Claims 2 to 6, **characterised in that** the third silencing bodies (16) are arranged in a space between the first and second magnet systems (7, 10).

8. The magnetic levitation railway according to one of Claims 1 to 7, **characterised in that** the second and third silencing bodies (15, 16) fill the entire usable volume between the two magnet systems (7, 10).

9. The magnetic levitation railway according to one of Claims 1 to 8, **characterised in that** the silencing bodies (14 to 16) consist of materials with high internal friction.

10. The magnetic levitation railway according to one of Claims 1 to 9, **characterised in that** the first silencing bodies (14) are only provided in sections of the driveway where silencing is desired or necessary.

## Revendications

1. Train à suspension magnétique avec une voie, qui contient une pluralité de supports (2) pourvus de blocs statoriques (4), disposés les uns derrière les autres dans une direction de conduite, comportant au moins un véhicule (1), qui contient au moins un premier système magnétique (7), qui forme avec les blocs statoriques (4) un moteur linéaire à stator déployé et est espacé lorsque le véhicule (1) est en fonctionnement des blocs statoriques (4) par un jeu porteur entraînant sa sustentation, et comportant des premiers éléments d'atténuation du bruit montés sur les supports (2), **caractérisé en ce que** les premiers éléments d'atténuation du bruit sont constitués de corps d'atténuation du bruit (14) volumineux, qui sont disposés sur les supports (2) de telle sorte qu'ils viennent reposer lors du passage du véhicule (1) dans un espace entre les supports (2) et le premier système magnétique (7) et le jeu porteur, et **en ce que** sur le côté du système magnétique (7) qui se détourne des supports (2) des deuxièmes corps d'atténuation du bruit (15) conçus de manière correspondante sont montés sur le véhicule (1).

2. Train à suspension magnétique selon la revendication 1, **caractérisé en ce que** les supports (2) sont pourvus de rails de guidage latéraux (9) disposés perpendiculairement aux blocs statoriques (4), le véhicule (1) présente au moins un deuxième système magnétique (10) coopérant avec les rails de guidage latéraux (9) et formant avec ceux-ci un jeu de guidage et des troisièmes corps d'atténuation du bruit (16) sont disposés dans un espace au-dessous du deuxième système magnétique (10) et du jeu de guidage.

3. Train à suspension magnétique selon les revendications 1 ou 2, **caractérisé en ce que** les deuxièmes et troisièmes corps d'atténuation du bruit (15, 16) sont logés dans des caissons de dos d'aimant (11) portés par les châssis de sustentation (8) du véhicule (1).

4. Train à suspension magnétique selon une des revendications 1 à 3, **caractérisé en ce que** les deuxièmes et troisièmes corps d'atténuation du bruit (15, 16) sont recouverts vers l'extérieur par des pièces de revêtement (17).

5. Train à suspension magnétique selon une des revendications 1 à 4, **caractérisé en ce que** les premiers corps d'atténuation du bruit (14) dépassent à l'intérieur d'un espace entre les blocs statoriques (4) et les supports (2).

6. Train à suspension magnétique selon une des revendications 1 à 5, **caractérisé en ce que** les supports (2) sont pourvus dans les courbes de la voie de premiers corps d'atténuation du bruit (14), seulement là où des espaces libres (20, 21) suffisamment grands entre les supports (2) et les blocs statoriques (4) sont présents.

7. Train à suspension magnétique selon une des revendications 2 à 6, **caractérisé en ce que** les troisièmes corps d'atténuation du bruit (16) sont disposés dans un espace entre le premier et le deuxième système magnétique (7, 10).

8. Train à suspension magnétique selon une des revendications 1 à 7, **caractérisé en ce que** les deuxièmes et troisièmes corps d'atténuation du bruit (15, 16) remplissent la totalité du volume utile entre les deux systèmes magnétiques (7, 10).

9. Train à suspension magnétique selon une des revendications 1 à 8, **caractérisé en ce que** les corps d'atténuation du bruit (14 à 16) sont constitués de matériaux avec haute friction interne.

10. Train à suspension magnétique selon une des revendications 1 à 9, **caractérisé en ce que** les premiers corps d'atténuation du bruit (14) sont prévus seulement dans des portions de la voie, où une atténuation du bruit es souhaitée ou requise.
